# EUROPÄISCHE PATENTSCHRIFT

(11) **EP 1 360 529 B1**
(45) Veröffentlichungstag und Bekanntmachung des Hinweises auf die Patenterteilung: **30.06.2004**
(21) Anmeldenummer: 02710822.4
(22) Anmeldetag: 30.01.2002
(51) Int. Cl.: G02B 5/02, G02B 3/00, B29D 11/00, G03B 21/62, G02F 1/1335

(54) **VERFAHREN ZUR HERSTELLUNG EINES MIKROLINSENARRAYS**
METHOD OF PRODUCING A MICROLENS ARRAY
PROCEDE DE FABRICATION D'UN RESEAU DE MICROLENTILLES

(30) Priorität: 09.02.2001 DE 10105958
(43) Veröffentlichungstag der Anmeldung: 12.11.2003
(73) Patentinhaber: Fraunhofer-Gesellschaft zur Förderung der angewandten Forschung e.V., 80686 München (DE)
(72) Erfinder: BLÄSI, Benedikt, 79102 Freiburg (DE); BOERNER, Volkmar, 79100 Freiburg (DE); GOMBERT, Andreas, 79100 Freiburg (DE); NIGGEMANN, Michael, 79102 Freiburg (DE)
(74) Vertreter: Rösler, Uwe, Dipl.-Phys.
(86) Internationale Anmeldenummer: PCT/EP2002/000970
(87) Internationale Veröffentlichungsnummer: WO 2002/065167

(56) Entgegenhaltungen:
- WO-A-00/79341
- US-A- 4 421 398
- US-A- 5 473 454
- US-B1- 6 317 263

## Beschreibung

### Technisches Gebiet

Die Erfindung bezieht sich auf ein Verfahren zur Herstellung eines Mikrolinsenarrays, das aus einer flächigen Anordnung von Mikrolinsen besteht, die jeweils eine abhängig vom Azimuthwinkel sich ändemde numerische Apertur (NA) aufweisen, d.h. dass die Mikrolinsen eine bezüglich zweier sich schneidender Krümmungsachsen unterschiedliches Oberflächenkrümmung mit Krümmungsradien ungleich unendlich aufweisen, wobei die Mikrolinsen nahtlos innerhalb des Mikrolinsenarrays zusammenhängen, mittels holographischer Belichtung einer Schicht aus einem photoempfindlichen Material auf einem Substrat und anschließender Entwicklung der Schicht zur Erzeugung einer Oberflächenstruktur,

Optische Diffusoren sind Streuflächen, an denen einfallendes Licht diffus gestreut wird. Populärste Anwendungsbeispiele optischer Diffusoren sind Mattscheiben in der Fotografie- sowie Projektionstechnik, auf die ein Bild projiziert wird. Das Licht, das zur Bilderzeugung auf die Mattscheibe trifft, wird von diesem gestreut, also in unterschiedliche Richtungen abgelenkt. Durch diese Streuung wird erreicht, dass das auf die Mattscheibe projizierte Bild aus unterschiedlichen Richtungen erkennbar ist. So werden Streu- bzw. Mattscheiben beispielsweise in Kleinbild-Spiegelreflexkameras oder in Mittelformatkameras eingesetzt. Auch bei Rück- oder Frontprojektionssystemen ist ein Licht streuendes Element in Form einer großformatigen Leinwand oder einer Mattscheibe, auf die das Bild projiziert wird, erforderlich. Das Lichtfeld, das die Leinwand bzw. Mattscheibe verlässt, ist aufgrund der lichtstreuung diffus, so dass diese Licht streuenden Elemente auch als Diffusoren bezeichnet werden.

Ein Diffusor kann entweder in Transmission, beispielsweise bei Rückprojektionssystemen, oder in Reflexion, beispielsweise bei Frontprojektionssystemen, betrieben werden.

Eine wesentliche Eigenschaft von Diffusoren ist deren Streuprofil, das die winkelaufgelöste Streueffizienz bei senkrecht auf den Diffusor einfallender kollimierter Lichtstrahlung zeigt. Die Streueffizienz ist definiert als die unter einem bestimmten Austrittswinkel gemessene relative Intensität der Streustrahlung normiert auf die gemessene Intensität unter dem Austritts- bzw. Blickwinkel 0°. Eine vollständige Charakterisierung des Streuverhaltens eines Diffusors ist über die sogenannte Bidirektionale Reflektions- und Transmissionsfunktion, kurz "BRTF", möglich. Ein komplettes zweidimensionales Streuprofil umfaßt die Streueffizienz für den gesamten Halbraum. In der Regel kann ein Diffusor durch zwei eindimensionale Streuprofile in horizontaler bzw. x-Richtung und vertikaler bzw. y-Richtung charakterisiert werden. Ein Diffusor, dessen x- und y-Streuprofil annähemd gleich sind, wird als symmetrischer Diffusor bezeichnet. Bei unterschiedlichen Streuprofilen für x- und y-Richtung handelt es sich um einen asymmetrischen oder auch anisotropen Diffusor.

Das Streuprofil eines Diffusors muss an die beabsichtigte Anwendung angepasst sein. Für jede Anwendung ergibt sich aus den geometrischen Gegebenheiten und der beabsichtigten optischen Wirkung ein spezifischer Blickwinkelbereich. So ist bei großformatigen Projektionsbildschirmen in der Regel ein asymmetrischer Blick- bzw. Streuwinkelbereich erforderlich, bei dem der horizontale Blickwinkel größer als der vertikale Blickwinkel ausfallen sollte.

### Stand der Technik

Zur Herstellung von Diffusoren sind unterschiedliche Techniken bekannt. So können Diffusoren, deren Funktion auf Oberflächenstreuung beruht, durch mechanische Bearbeitung der Oberfläche, wie beispielsweise Sandstrahlen, oder durch chemische Bearbeitung der Oberfläche, beispielsweise durch einen Ätzprozess, mit einer streuenden Oberflächenstruktur versehen werden, gewonnen werden. Auch dienen physikalische oder chemische Beschichtungsprozesse der Herstellung vorstehend genannter Diffusoren. Mit diesen Techniken lassen sich in der Regel jedoch nur symmetrische Diffusoren mit gaußförmigem Streuprofil herstellen. Eine zuverlässige Möglichkeit zur gezielten Beeinflussung des Streuprofils ist bei diesen Techniken nicht bekannt.

Eine weitere bekannte Möglichkeit zur Erzeugung einer geeigneten Oberflächenstruktur für die Herstellung eines Diffusors besteht im Einsatz von formbaren Materialien, wie beispielsweise Polymeren, in Verbindung mit einem Replikationsprozess. Bei der Heptikationstechnik wird dem Polymerkörper mit einer geeignet strukturierten Prägevorlage eine Oberflächenstruktur eingeprägt, aus der das Streuverhalten resultiert. Die Prägevorlage kann durch Belichtung einer Photoresistschicht mit einem gestreuten Lichtfeld und anschließende Entwicklung der Photoresistschicht hergestellt werden. Die resultierende Photoresiststruktur wird dann, beispielsweise durch galvanisches Abformen, in eine Prägevorlage übertragen. Dies hat den Vorteil, dass die gewünschte Oberflächenstruktur nur einmal für eine Prägevorlage generiert werden muss und für die Herstellung sehr vieler Diffusoren eingesetzt werden kann. Die mit dieser Technik hergestellten Diffusoren reproduzieren die Form des Streuprofils des eingestrahlten (gestreuten) Lichtfeldes, das wiederum mit Hilfe eines Diffusors, im Folgenden als Primärdiffusor bezeichnet, generiert wird. Das Streuprofil der hergestellten Diffusoren ist damit abhängig vom Streuprofil des Primärdiffusors und in der Regel wiederum annähemd gaußförmig.

Für die Erzeugung von asymmetrischen Diffusoren sind insbesondere auf Volumenholographie basierende Belichtungstechniken bekannt, mit denen eine Brechungsindexmodulation im Volumen einer lichtempfindlichen Schicht erzeugt wird. Die damit hergestellten Diffusoren arbeiten nach dem Prinzip der Volumenstreuung.

So wird in der US 5,365,354 ein Verfahren zur Herstellung von asymmetrischen Diffusoren beschrieben, bei dem ein Lichtfeld durch einen Primärdiffusor geleitet und in ein lichtempfindliches Material belichtet wird. Mit dem lichtempfindlichen Material wird durch die Bestrahlung ein Volumenhologramm aufgenommen. Bei emeuter Bestrahlung mit Licht wirkt das Volumenhologramm seinerseits durch Rekonstruktion des aufgenommenen Primärdiffusors streuend. In einer weiteren Ausgestaltung dieses Verfahrens werden zwei diffuse Lichtbündel aus unterschiedlichen Richtungen eingestrahlt, um einen so genannten Multiplex-Diffusor herzustellen. Bei einem Multiplex-Diffusor ist das Diffusionsverhalten in verschiedenen Richtungen unterschiedlich, da unter einem bestimmten Einfallswinkel nur das Hologramm des einen und unter einem anderen Einfallswinkel nur das Hologramm des anderen Lichtbündels rekonstruiert wird. Eine derartige Technik ist nur durch Erstellung von Volumenhologrammen möglich und erfordert, dass die beiden Wellenfelder der beiden Lichtbündel nicht zueinander kohärent sind. Das Verfahren der US 5,365,354 führt jedoch in der Regel wiederum zu gaußförmigen oder nahezu gaußförmigen Streuprofilen, da die Form des Streuprofils des im Belichtungsaufbau benutzten Primärdiffusors dupliziert wird.

Die US 3,708,217 beschreibt ebenfalls eine Technik zur Aufnahme eines Volumenhologrammes für die Herstellung von asymmetrischen Diffusoren. Bei diesem Verfahren wird auf einer lichtempfindlichen Schicht eine Referenzwelle mit einer Objektwelle überlagert, die durch einen Primärdiffusor geleitet wurde, um ein Volumenhologramm herzustellen. Durch geeignete räumliche Anordnung des Primärdiffusors zur lichtempfindlichen Schicht lässt sich ein stark richtungsabhängiges Streuprofil erzeugen. Die Verwendung einer ebenen Referenzwelle führt jedoch dazu, dass die optische Transferfunktion des Volumenhologrammes einen stark periodischen Anteil aufweist, der zu unerwünschten Farbeffekten beim Einsatz dieses Diffusors führen kann. Weiterhin wird in dieser Druckschrift keine Lösung angeboten, mit der ein möglichst flaches Streuprofil realisiert werden könnte.

in D.J. Schertler et al., Applied Optics 38 No. 2, 1999, Seiten 291 - 303, ist eine Technik zur Erzeugung eines abgeflachten Streuprofils beschrieben, bei der eine Kombination eines eindimensionalen Phasenbeugungsgitters mit einem symmetrisch streuenden Diffusor eingesetzt wird. Diese beiden Komponenten können dabei entweder als Einzelkomponenten hintereinander angeordnet oder in Form der beiden Oberflächen eines transparenten Trägermaterials ausgebildet sein. Die Diffusoroberfläche wurde hierbei mit einer Ätztechnik, die Gitteroberfläche mit einer Photoresisttechnik erzeugt. Nachteil dieses Systems ist, daß die Streucharakteristik nur in einer Richtung und zwar parallel zum Gittervektor durch das Gitter bestimmt werden kann. In die andere Richtung muß das Streuprofil durch den Diffusor definiert werden. Andererseits ist man in der Wahl des Diffusors nicht frei, da der Diffusor zusätzlich die Beugungs-, Farb- und Moiré-Effekte zwischen dem Gitter und den Pixeln eines Displays des optischen Gitters ausgleichen muß.

Neben den vorstehend genannten Diffusorsysteme sind auch Mikrolinsen dazu geeignet Licht mit einer bestimmten Streucharakteristik durch entsprechende Brennweitenwahl und Einstellung bestimmter optischer Abbildungseigenschaften zu streuen. Mikrolinsen als Diffusoren sind beispielsweise beschrieben in dem Artikel von P.C.H. Poon et al., "Microlens array diffuser for incoherent illumination, 3^{rd} EOS Topical Meeting on Microlens Arrays, National Physics Laboratory, Teddington (UK), Mai 1995, 89-91. Dabei finden Zylinderlinsen oder sogenannte Lentikulare sowie auch sphärische Linsen Anwendung. In beiden Fällen sind Farb- und Beugungs-Effekte und bei Displays Moiré-Effekte von großem Nachteil.

Auch ist ein Diffusor-System bestehend aus Lentikutaren, d.h. einachsig astigmatisch gekrümmte Mikrolinsen, bspw. Zylinderlinsen, kombiniert mit einem Diffusor aus der Literatur bekannt In dem Artikel von R. Bradley et. al., "Ultra-wide viewing angle rear projection television screen, IEEE Trans. Consum. Electron. CE-31, 185-193, 1985 ist ein Projektionssystem für die Rückwandprojektion, bspw. für Großbildschirmflächen beschrieben, das einen Volumendiffusor vorsieht, an dessen Lichtaustrittsfläche lamellenartig angeordnete Zylinderlinsen angeordnet sind. Nachteil dieses Systems ist, daß die Streucharakteristik nur in einer Richtung, nämlich senkrecht zu den Lamellen der Zylinderlinsen durch die Lentikulare bestimmt ist. in die andere Richtung muß das Streuprofil durch den Diffusor definiert werden. Andererseits ist man in der Wahl des Diffusors jedoch nicht frei, da der Diffusor zusätzlich die Beugungs-, Farb- und Moiré-Effekte der Lentikulare ausgleichen muß.

Aus der WO 00/79341 A geht die Kombination eines über spezielle optische Abbildungseigenschaften verfügenden Mikrolinsenarrays mit einem Diffusor hervor. Der Druckschrift ist jedoch nicht entnehmbar, auf welche Weise das für die anisotrope Lichtstreuung eingesetzte Mikrolinsenarray herstellbar ist.

In der US 4,421,398 ist eine entsprechende Mikrolinsenarrayanordnung beschrieben wird, jedoch ihre Verwendung als Teil eines anisotropen Lichtstreuers nicht vorgeschlagen wird. Gleichwohl der Druckschrift ein mögliches Herstellverfahren für ein derartiges Mikrolinsenarray entnommen werden kann, gemäß dem wenigstens drei oder mehr zueinander kohärente Wellenfelder zur Ausbildung eines zweidimensionalen zylindrischen Interferenzmusters gefordert wird. Dies jedoch ist mit einem erheblichen verfahrenstechnischen Aufwand verbunden.

### Darstellung der Erfindung

Ausgehend von dem vorstehend genannten Stand der Technik liegt der Erfindung die Aufgabe zugrunde ein möglichst einfaches, kostengünstiges Verfahren zur Herstellung eines Mikrolinsenarrays, das aus einer flächigen Anordnung von Mikrolinsen besteht, die jeweils eine abhängig vom Azimuthwinkel sich ändernde numerische Apertur (NA) aufweisen, d.h. dass die Mikrolinsen eine bezüglich zweier sich schneidender Krümmungsachsen unterschiedliches Oberflächenknimmung mit Krümmungsradien ungleich unendlich aufweisen, wobei die Mikrolinsen nahtlos innerhalb des Mikrolinsenarrays zusammenhängen, mittels holographischer Belichtung einer Schicht aus einem photoempfindlichen Material auf einem Substrat und anschließender Entwicklung der Schicht zur Erzeugung einer Oberflächenstruktur anzugeben.

Die Lösung der der Erfindung zugrundeliegenden Aufgabe ist im Anspruch 1, 2 und 3 angegeben. Den Erfindungsgedanken vorteilhaft weiterbildende Merkmale sind Gegenstand der Unteransprüche sowie der Beschreibung zu entnehmen.

Eine Kombination aus einem Mikrolinsenarray und einem Diffusor ist derart ausgebildet, dass das Mikrolinsenarray aus einer flächigen Anordnung von Mikrolinsen besteht, die jeweils eine abhängig vom Azimuthwinkel sich ändernde numerische Apertur (NA) aufweisen und deren Brennweiten für alle Azimuthwinkel kleiner unendlich ist. Dies kann durch eine Änderung der Unsenkrümmung und/oder der Apertur abhängig vom Azimuthwinkel erreicht werden.

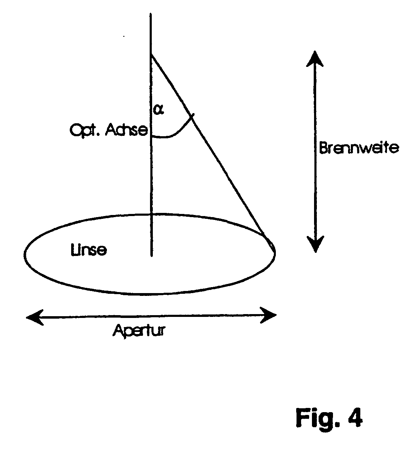

Zur Erläuterung des Begriffes "Numerische Apertur" wird an dieser Stelle auf Figur 4 verwiesen.

Definition numerische Apertur: NA = n sinα (Winkel α definiert nach Fig.4: Öffnungshalbwinkel vom Fokus aus gesehen). Dabei wird vorausgesetzt, dass das die Mikrolinse umgebende Medium einen ortsunabhängigen, konstanten Brechungsindex besitzt.

Durch Vorsehen einer bezogen auf zwei Achsen definiert vorgebbaren numerischen Apertur (NA) an den einzelnen Mikrolinsen, die bevorzugt in einem zweidimensionalen Mikrolinsenarray angeordnet sind und nahtlos aneinander grenzen, ist die Streucharakteristik des Diffusorsystems durch die Mikrolinsen jeweils in Richtung der Achsen individuell einstellbar. Die Richtungen, in denen die numerische Apertur (NA) maximal bzw. minimal ist, werden als Hauptachsen bezeichnet Üblicherweise stehen beide Hauptachsen zueinander senkrecht. Sowohl die Achsenausrichtung als auch die Abhängigkeit der numerischen Apertur (NA) vom Azimuthwinkel ist in allen arrayförmig angeordneten Mikrolinsen identisch, sodass das Streuverhalten jeder einzelnen Mikrolinse auch in der Vielfalt ihrer flächigen Anordnung erhalten bleibt, wodurch ein flächig homogenes Streuverhalten geschaffen wird.

Das Mikrolinsenarray ist räumlich vorzugsweise derart anzuordnen, dass die Hauptachsen der Mikrolinsen jeweils parallel zur horizontalen und vertikalen Raumrichtung ausgerichtet sind. Auf diese Weise kann ein für technische Anwendungszwecke sinnvolles Streuverhalten in vertikaler und horizontaler Richtung definiert vorgegeben werden.

Von besonderer Bedeutung ist, dass eine Variation der numerischen Apertur (NA) durch eine sich abhängig vom Azimuthwinkel ändemde Krümmung der Linsenoberfläche erreicht werden kann, d.h. dass die Mikrolinsen ein bezüglich zweier sich schneidender Krümmungsachsen unterschiedliches Oberflächenkrümmungsverhalten mit Krümmungsradien ungleich unendlich aufweisen. Im Gegansatz zu Linsen mit unendlichem Krümmungsradius entlang einer Hauptachse (Zylinderlinsen) kann so die Strahlung gezielt in zwei Dimensionen gestreut werden, wobei das Verhältnis der Halbwinkel entlang der beiden Hauptachsen stufenlos zwischen 0 und 1 (0 und 1 ausgeschlossen) eingestellt werden kann. Ebenfalls kann die angestrebte Variation der numerischen Apertur (NA) (auch bei konstanter Krümmung) durch eine sich abhängig vom Azimuthwinkel ändernde Linsenapertur erreicht werden.

Da die Streucharakteristik im Wesentlichen durch das Mikrolinsenarray vorgegeben ist, ist die Auswahl bezüglich des Diffusors im Unterschied zum vorstehend genannten Stand der Technik, frei möglich. Der Diffusor, der entweder als Oberflächen- oder als Volumendiffusor ausgebildet sein kann, dient lediglich zur Glättung des Streuprofils, wodurch Farb-, Beugungs- oder Moiré-Effekte unterdrückt oder Profilverläufe am Rande des Streubereiches glatter oder steiler gestaltet werden können.

Beide Komponenten, d. h. das Mikrolinsenarray sowie der Diffusor können in einer einzigen Baueinheit ausgebildet sein. Hierbei weisen beide Systeme lichttransparentes Material auf, aus dem einstückig der Diffusor sowie das Mikrolinsenarray aufgebaut sind. Dabei begrenzt das Mikrolinsenarray einseitig die einstückig ausgebildete optische Einheit, über das, je nach Orientierung zum Lichtstrahl, Licht in das optische Element eintritt oder aus diesem austritt. Ebenso ist es möglich, Diffusor und Mikrolinsenarray als zwei getrennte optische Elemente auszubilden und somit eine beliebige Kombinationsmöglichkeit aus einer Vielzahl unterschiedlich ausgebildeter Diffusoren und Mikrolinsenarrays zu schaffen. Durch eine derartige Ausführung ist es möglich aus m Diffusoren und n Mikrolinsenarrays m x n verschiedene Diffusorsysteme zusammen zu stellen.

Die durch das Mikrolinsenarray bedingte optische Wirkung beruht vorzugsweise einzig und allein auf der geometrischen Oberflächenstrukturierung, durch die auch zugleich die einzelnen Mikrolinsen selbst körperlich gebildet werden. Die einzelnen Mikrolinsen weisen dabei typischerweise Strukturgrößen etwa zwischen 0,5 µm bis zu 1000 µm auf.

Um die störenden Farb-, Beugungs- oder Moiré-Effekte zu reduzieren, die ursprünglich im Wesentlichen durch das Mikrolinsenarray erzeugt werden, ist es von besonderem Vorteil, die einzelnen Mikrolinsenarrays nahtlos, d. h. ohne optische Grenzflächen zwischen zwei benachbarten Mikrolinsen innerhalb des Mikrolinsenarrays aneinandergrenzend auszubilden.

Zur Herstellung derartig ausgebildeter Mikrolinsenarrays eignet sich grundsätzlich die holographische Belichtung einer Schicht aus einem photoempfindlichen Material, das auf einem Substrat aufgebracht ist, und das nach der Belichtung zur Erzeugung einer Oberflächenstruktur entwickelt wird. Die Belichtung des vorzugsweise aus einem Photoresist bestehenden Materials, das auf dem Substrat aufgebracht ist, erfolgt in zwei Schritten. Zunächst werden wenigstens zwei zueinander kohärente Wellenfelder miteinander in Interferenz gebracht, wobei das dabei entstehende Interferenzmuster das photoempfindliche Material belichtet. Anschließend wird das Substrat, das für gewöhnlich auf einem Halter aufliegt, um einen Winkel von ≠ 90° gedreht und nachfolgend ein weiteres mal mit den in den Interferenz tretenden Wellenfeldem belichtet.

Grundsätzlich ist möglich, die durch die Belichtung hervorgerufene Strukturierung innerhalb der Photoresistschicht im Wege eines Entwicklungsprozesses in Form einer Oberflächenstruktur freizulegen und diese galvanisch in Metalle, vorzugsweise in eine Nickelmaske, abzuformen. Mit dem auf diese Weise erhaltenen Metallstempel können ferner z.B. Kunststoffe oder Sol-Gel-Schichten geprägt werden. Auch ist es möglich, die Photoresiststruktur durch Ätztechniken in andere Materialien, beispielsweise in ein Halbleitersubstrat zu übertragen. Mit Hilfe der vorstehend genannten Technik ist es möglich, Mikrolinsen mit den vorstehende bezeichneten zwei-achsigen astigmatischen Eigenschaften herzustellen.

Alternativ zur vorstehend erläuterten Belichtungstechnik ist es ebenso möglich, nahtlos aneinandergrenzende Mikrolinsen innerhalb eines Mikrolinsenarrays derart herzustellen, dass zwei zueinander kohärente Wellenfelder miteinander interferieren, und das dabei entstehend Interferenzmuster das photoempfindliche Material belichtet. Nach erfolgter, erster Belichtung wird das Substrat um einen Winkel ≠ 0° gedreht und nachfolgend ein weiteres Mal mit den in Interferenz tretenden Wellenfeldern belichtet, wobei die Belichtungsdosis beider aufeinanderfolgender Belichtungen unterschiedlich groß gewählt ist.

Eine dritte Variante zur Herstellung eines Mikrolinsenarrays sieht vor, dass zwei zueinander kohärente Wellenfelder miteinander interferieren und ein erstes streifenförmiges Interferenzmuster bilden, mit dem das photoempfindliche Material belichtet wird. Ebenso wie im vorstehend genannten Fall wird das Substrat nach der ersten erfolgten Belichtung um einen Winkel ≠ 0° gedreht und nachfolgend ein weiteres Mal mit den in Interferenz tretenden Wellenfeldern belichtet, wobei das streifenförmige Interferenzmuster während der zweiten Belichtung eine unterschiedliche Streifenperiode aufweist im Vergleich zum ersten Interferenzmuster.

Schließlich erlaubt eine vierte Variante der Belichtung des photoempfindlichen Materials die Herstellung nahtlos aneinander grenzender Mikrolinsen innerhalb eines Mikrolinsenarrays, indem wenigstens drei zueinander kohärente Wellenfelder derart miteinander interferieren, dass die drei Wellenfelder aus jeweils unterschiedlichen Raumwinkeln auf das photoempfindliche Material auftreffen und bezogen zur Normalen der Substratebene jeweils unterschiedliche Azimuthalwinkel einschließen, so dass die Belichtungssituation von der Rotationssymmetrie bezogen zur Normalen auf die Substratebene abweicht.

Mit allen vorstehend genannten alternativen Belichtungstechniken ist es möglich die eingangs beschriebenen zwei-achsig astigmatischen Mikrolinsen innerhalb eines Mikrolinsenarrays derart herzustellen, dass die Mikrolinsen nahtlos aneinander grenzen, wodurch die vorstehend genannten nachteiligen Farb-, Beugungs- oder Moiré-Effekte weitgehend unterdrückt werden können.

Mit Hilfe derartiger Mikrolinsen ist es insbesondere möglich, Diffusoren weitgehend frei zu wählen, beispielsweise Diffusoren zu verwenden mit isotroper Streucharakteristik oder aber Schmalwinkeldiffusoren, die einen Halbwinkel < 20° aufweisen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnung exemplarisch beschrieben. Es zeigen:
- Fig. 1a, b: Kombination aus Mikrolinsen und Diffusor,
- Fig. 2a, b: Diagrammdarstellung bezüglich Streulichtverteilung im Vergleich zwischen einem Mikrozylinderlinsenarray und einem zwei-achsig astigmatischen Mikrolinsenarray sowie
- Fig. 3a, b: Leuchtfleckaufnahmen einer Streulichtverteilung eines hexagonalen astigmatischen Mikrolinsenarrays sowie eines an sich bekannten Zylinderlinsenarrays
- Fig. 4: Darstellung zur Definition des Begriffes "Numerische Apertur" (NA)

### Wege zur Ausführung der Erfindung, gewerbliche Verwendbarkeit

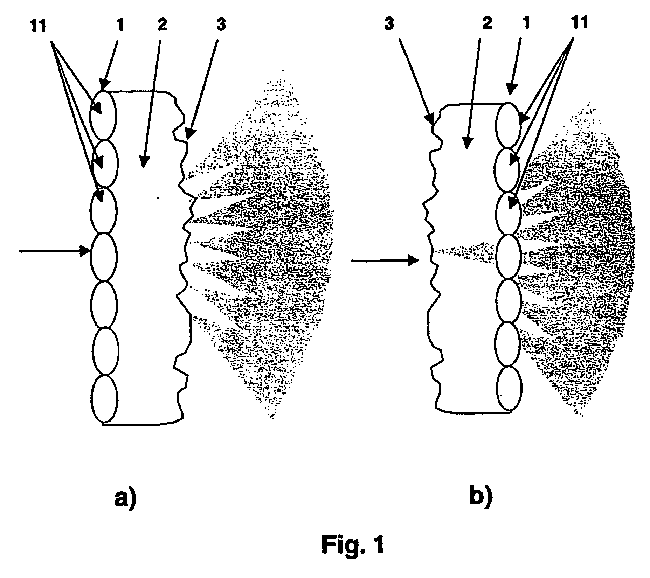

In Figur 1a ist eine einstückige Anordnung bestehend aus einem Mikrolinsenarray (aus Übersichtlichkeitsgründen ist jeweils nur eine Mikrolinsenzeile dargestellt) gezeigt, bei der Licht zunächst auf das Mikrolinsenarray 1 auftrifft und durch den lichttransparenten Strahl im Körper 2 hindurchtritt, der an der, dem Mikrolinsenarray 1 gegenüberliegenden Oberfläche eine diffus streuende Oberfläche 3, der sogenannte Diffusor, aufweist. Im Falle der Figur 1a handelt es sich um einen Oberflächendiffusor, der das durch den Strahlenkörper 2 hindurchtretende Licht in den in Figur 1a rechten Halbraum diffus streut.

Ebenso ist es möglich, die Diffusoroberfläche 3 dem Lichteinfall auszusetzen, wie es in Figur 1b gezeigt ist. Ähnlich dem Streuergebnis gemäß der Anordnung in Figur 1a wird auch das diffus durch den Strahlenkörper 2 hindurchtretende und auf die Mikrolinsen 3 gerichtete Licht diffus in den rechten Halbraum gemäß Figur 1b gestreut. Wesentliches Merkmal der in den Figuren 1a und 1 b dargestellten Anordnungen sind die schematisch gezeichneten Mikrolinsen 11, die über zwei, vorzugsweise senkrecht zueinander stehende Krümmungsachsen verfügen. Je nach Krümmungsverhalten bezüglich beider Achsen kann die Streucharakteristik des aus dem Mikrolinsen-Diffusor-System austretende Streulicht individuell eingestellt werden. Somit kann der Diffusor 3 als symmetrischer oder als Schmalwinkel- Diffusor ausgebildet sein.

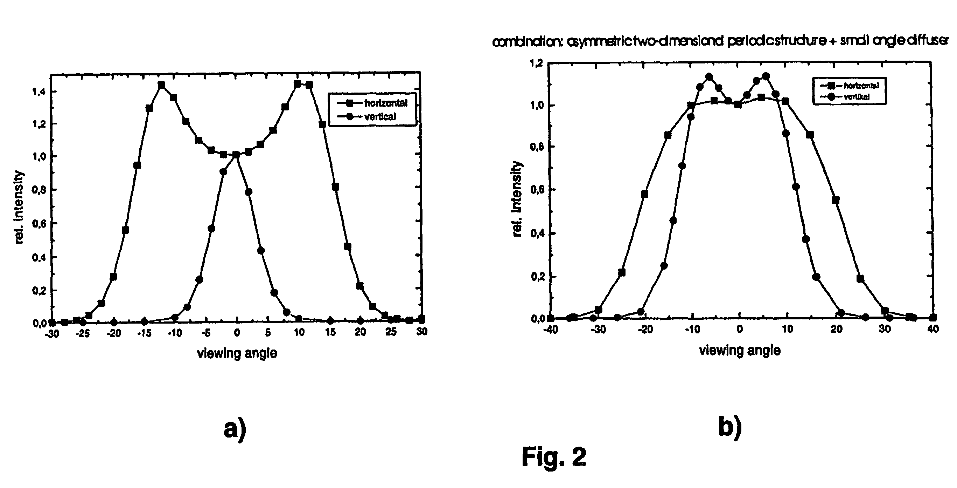

In Figur 2a ist ein Diagramm dargestellt, das mit Hilfe eines Zylinderlinsenarrays in Kombination mit einem Diffusor gemäß dem eingangs beschriebenen Stand der Technik gewonnen worden ist Entlang der Abszisse sind die Streuwinkel in Grad, entlang der Ordinate die relative Streuintensität angetragen. Deutlich erkennbar ist die nur geringe Streueffizienz bezüglich der vertikalen Achse, wie man anhand der mit Punkten durchzogenen Intensitätslinie erkennen kann. Das Diffusorsystem weist bezüglich des horizontal gestreuten Lichtanteils zwei Intensitätsmaxima im Bereich von ± 10° auf, wohingegen das Streumaximum bezüglich der vertikalen Raumrichtung unter einem Beobachtungswinkel von 0° auftritt.

Anders hingegen verhält es sich bei Verwendung eines Mikrolinsenarrays mit jeweils den erfindungsgemäß gekrümmten Mikrolinsen. Eine diesbezügliche Streulichtverteilung in Diagrammdarstellung ist aus Figur 2b zu entnehmen. Im Unterschied zum vorstehend geschilderten Fall ist sowohl das horizontale als auch das vertikale Streulicht in weiten Raumwinkeln retativ zur senkrechten Beobachtungsrichtung zu beobachten. Je nach Ausbildung der astigmatischen Verhältnisse bezüglich der beiden Krümmungsachsen können die in Figur 2b dargestellten Streulichtverläufe für die horizontale als auch vertikale Streuung nahezu beliebig eingestellt werden, ohne dabei bestimmte Anforderungen an den Diffusor stellen zu müssen.

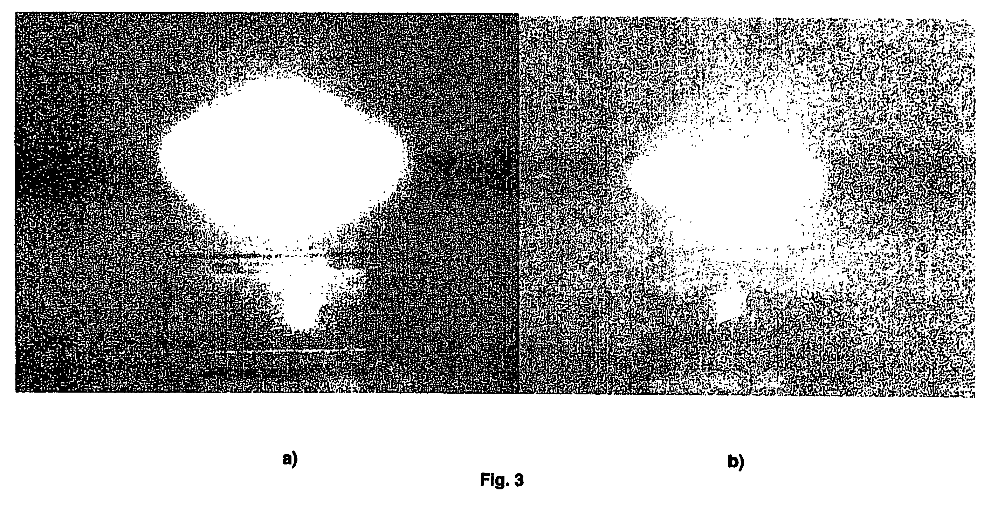

In Figur 3a ist eine photographische Aufnahme eines Leuchtfleckes dargestellt, der sowohl in horizontaler als auch in vertikaler Richtung bezogen auf die senkrecht zur Zeichenebene gedachte Lichteinfallsrichtung große Streuanteile aufweist. Zur Erzeugung des in Figur 3a dargestellten Lichtfleckes sind hexagonal astigmatische Mikrolinsen in arrayförmiger Anordnung verwendet worden. Demgegenüber ist in Figur 3b ein Lichtfleck abgebildet, der mit einem ansich bekannten Mikrolinsenarray bestehend aus einzelnen Zylinderlinsen aufgenommen worden ist. Hier fehlen nahezu vollständig Streulichtanteile entlang der Vertikalen.

Der erfindungsgemäße Einsatz von um zwei unterschiedliche Krümmungsachsen oberflächengekrümmte Mikrolinsen in einem nahtlos großflächigen Mikrolinsenarray vorzugsweise von > 1500 cm² Größe ermöglicht in Kombination mit eines ansich beliebigen Diffusors die Einstellung nahezu beliebiger Streucharakteristiken.

### Bezugszeichenliste

- 1: Mikrolinsenarray
- 11: Mikrolinse
- 2: Strahlenkörper
- 3: Diffusoroberfläche

## Patentansprüche

1. Verfahren zur Herstellung eines Mikrolinsenarrays, das aus einer flächigen Anordnung von Mikrolinsen besteht, die jeweils eine abhängig vom Azimuthwinkel sich ändemde numerische Apertur aufweisen, d.h. dass die Mikrolinsen eine bezüglich zweier sich schneidender Krümmungsachsen unterschiedliche Oberflächenkrümmung mit Krümmungsradien ungleich unendlich aufweisen, wobei die Mikrolinsen nahtlos innerhalb des Mikrolinsenarrays zusammenhängen,
mittels holographischer Belichtung einer Schicht aus einem photoempfindlichen Material auf einem Substrat und anschließender Entwicklung der Schicht zur Erzeugung einer Oberflächenstruktur,
**dadurch gekennzeichnet, dass** zwei zueinander kohärente Wellenfelder miteinander interferieren und das dabei entstehende Interferenzmuster das photoempfindliche Material belichtet,
dass das Substrat nach erfolgter Belichtung um einen Winkel ungleich 90° gedreht wird und nachfolgend ein weiteres mal mit den in Interferenz tretenden Wellenfeldern belichtet wird.

2. Verfahren zur Herstellung eines Mikrolinsenarrays, das aus einer flächigen Anordnung von Mikrolinsen besteht, die jeweils eine abhängig vom Azimuthwinkel sich ändernde numerische Apertur aufweisen, d.h. dass die Mikrolinsen eine bezüglich zweier sich schneidender Krümmungsachsen unterschiedtiche Oberflächenkrümmung mit Krümmungsradien ungleich unendlich aufweisen, wobei die Mikrolinsen nahtlos innerhalb des Mikrolinsenarrays zusammenhängen,
mittels holographischer Belichtung einer Schicht aus einem photoempfindlichen Material auf einem Substrat und anschließender Entwicklung der Schicht zur Erzeugung einer Oberflächenstruktur,
**dadurch gekennzeichnet, dass** zwei zueinander kohärente Wellenfelder miteinander interferieren und das dabei entstehende interferenzmuster das photoempfindliche Material belichtet,
dass das Substrat nach erfolgter Belichtung um einen Winkel ungleich 0° gedreht wird und nachfolgend ein weiteres mal mit den in Interferenz tretenden Wellenfeldern belichtet wird, und
dass die Belichtungsdosis beider aufeinanderfolgender Belichtungen unterschiedlich ist.

3. Verfahren zur Herstellung eines Mikrolinsenarrays, das aus einer flächigen Anordnung von Mikrolinsen besteht, die jeweils eine abhängig vom Azimuthwinkel sich ändernde numerische Apertur aufweisen, d.h. dass die Mikrolinsen eine bezüglich zweier sich schneidender Krümmungsachsen unterschiedliche Oberflächenkrümmung mit Krümmungsradien ungleich unendlich aufweisen, wobei die Mikrolinsen nahtlos innerhalb des Mikrolinsenarrays zusammenhängen,
mittels holographischer Belichtung einer Schicht aus einem photoempfindlichen Material auf einem Substrat und anschließender Entwicklung der Schicht zur Erzeugung einer Oberflächenstruktur,
**dadurch gekennzeichnet, dass** zwei zueinander kohärente Wellenfelder miteinander interferieren und ein erstes streifenförmiges Interferenzmuster bilden, mit dem das photoempfindliche Material belichtet wird,
dass das Substrat nach erfolgter Belichtung um einen Winkel ungleich 0° gedreht wird und nachfolgend ein weiteres mal mit in Interferenz tretenden Wellenfeldern belichtet wird, die ein streifenförmiges Interferenzmuster bilden, das eine unterschiedliche Periode zum ersten Interferenzmuster aufweist.

4. Verfahren nach einem der Ansprüche 1 bis 3,
**dadurch gekennzeichnet, dass** als photoempfindliches Material ein Photoresist verwendet wird.

5. Verfahren nach einem der Ansprüche 1 bis 4,
**dadurch gekennzeichnet, dass** die Oberflächenstruktur durch einen anschließenden Ätzprozess in das Substrat übertragen wird.

6. Verfahren nach einem der Ansprüche 1 bis 5,
**dadurch gekennzeichnet, dass** die Oberflächenstruktur durch einen anschließenden Abformprozess in eine Form übertragen wird, die als Prägevorlage zur Prägung des Mikrolinsenarrays dient.

7. Verfahren nach Anspruch 6,
**dadurch gekennzeichnet, dass** die Oberflächenstruktur durch einen galvanischen Abformprozess in ein Metallsubstrat übertragen wird, der als Prägestempel verwendbar ist.

## Claims

1. Method of manufacturing a micro lens array consisting of a two-dimensional array of micro lenses including each a numerical aperture variable as a function of the azimuth angle, which means that the micro lenses have different surface curvatures relative to two intersecting axes of curvature of radii of curvature different from infinity, with said micro lenses being continuously coherent within said micro lens arrays,
by means of holographic exposure of a layer of a photosensitive material on a substrate and by subsequent development of the layer for creation of a surface structure,
**characterised in that** two wave fields coherent relative to each other interfere with each other while the interference pattern so created exposes said photosensitive material,
that after completion of the exposure, said substrate is turned by an angle different from 90° and that subsequently exposure is carried out once more with the wave fields caused to interfere with each other.

2. Method of manufacturing a micro lens array consisting of a two-dimensional array of micro lenses including each a numerical aperture variable as a function of the azimuth angle, which means that the micro lenses have different surface curvatures relative to two intersecting axes of curvature of radii of curvature different from infinity, with said micro lenses being continuously coherent within said micro lens arrays,
by means of holographic exposure of a layer of a photosensitive material on a substrate and by subsequent development of the layer for creation of a surface structure,
**characterised in that** two wave fields coherent relative to each other interfere with each other while the interference pattern so created exposes said photosensitive material,
that after completion of the exposure, said substrate is turned by an angle different from 0° and that subsequently exposure is carried out once more with the wave fields caused to interfere with each other, and
that the exposure doses of two successive exposures are different.

3. Method of manufacturing a micro lens array consisting of a two-dimensional array of micro lenses including each a numerical aperture variable as a function of the azimuth angle, which means that the micro lenses have different surface curvatures relative to two intersecting axes of curvature of radii of curvature different from infinity, with said micro lenses being continuously coherent within said micro lens arrays,
by means of holographic exposure of a layer of a photosensitive material on a substrate and by subsequent development of the layer for creation of a surface structure,
**characterised in that** two wave fields coherent relative to each other interfere with each other, forming a first strip-shaped interference pattern that is used to expose said photosensitive material,
that after completion of the exposure, said substrate is turned by an angle different from 0° and that subsequently exposure is carried out once more with the wave fields caused to interfere with each other, which wave fields form a strip-shaped interference pattern that presents a period different from that of said first interference pattern.

4. Method according to any of the Claims 1 to 3,
**characterised in that** a photoresist is used as photosensitive material.

5. Method according to any of the Claims 1 to 4,
**characterised in that** the surface structure is transferred into said substrate by a subsequent etching process.

6. Method according to any of the Claims 1 to 5,
**characterised in that** the surface structure is transferred by a subsequent moulding process into a mould that serves as moulding model for moulding said micro lens array.

7. Method according to Claim 6,
**characterised in that** said surface structure is transferred by a galvanic moulding process into a metal substrate applicable as male moulding form.

## Revendications

1. Procédé à fabriquer un réseau de micro lentilles composé d'un réseau bidimensionnel de micro lentilles, dont chacune a une ouverture numérique variable en fonction de l'angle azimutal, ce qui signifie que les micro lentilles ont des courbures superficielles différentes relativement à deux axes de courbure se coupant aux rayons de courbure différents de l'infinie, auxdites micro lentilles étant cohérentes en continu au-dedans desdits réseaux de micro lentilles,
moyennant d'exposition holographique d'une couche en un matériau photosensible sur un substrat et par développement subséquent de la couche afin de créer une structure superficielle,
**caractérisé en ce que** deux champs d'ondes, cohérents l'un relativement à l'autre, interfèrent l'un avec l'autre, pendant que l'image par interférence ainsi créée expose ledit matériau photosensible,
**en ce que**, suivant l'exposition, ledit substrat est tourné par un angle différent de 90°, et **en ce qu'**ensuite l'exposition est réalisée encore une fois avec les champs d'ondes causés à interférer l'un avec l'autre.

2. Procédé à fabriquer un réseau de micro lentilles composé d'un réseau bidimensionnel de micro lentilles, dont chacune a une ouverture numérique variable en fonction de l'angle azimutal, ce qui signifie que les micro lentilles ont des courbures superficielles différentes relativement à deux axes de courbure se coupant aux rayons de courbure différents de l'infinie, auxdites micro lentilles étant cohérentes en continu au-dedans desdits réseaux de micro lentilles,
moyennant d'exposition holographique d'une couche en un matériau photosensible sur un substrat et par développement subséquent de la couche afin de créer une structure superficielle,
**caractérisé en ce que** deux champs d'ondes, cohérents l'un relativement à l'autre, interfèrent l'un avec l'autre, pendant que l'image par interférence ainsi créée expose ledit matériau photosensible,
**en ce que**, suivant l'exposition, ledit substrat est tourné par un angle différent de 0°, et **en ce qu'**ensuite l'exposition est réalisée encore une fois avec les champs d'ondes causés à interférer l'un avec l'autre, et
**en ce que** les doses d'exposition de deux opérations d'exposition en succession sont différentes.

3. Procédé à fabriquer un réseau de micro lentilles composé d'un réseau bidimensionnel de micro lentilles, dont chacune a une ouverture numérique variable en fonction de l'angle azimutal, ce qui signifie que les micro lentilles ont des courbures superficielles différentes relativement à deux axes de courbure se coupant aux rayons de courbure différents de l'infinie, auxdites micro lentilles étant cohérentes en continu au-dedans desdits réseaux de micro lentilles,
moyennant d'exposition holographique d'une couche en un matériau photosensible sur un substrat et par développement subséquent de la couche afin de créer une structure superficielle,
**caractérisé en ce que** deux champs d'ondes, cohérents l'un relativement à l'autre, interfèrent l'un avec l'autre, en formant une première image par interférence sous forme de raies, qui est utilisée afin d'exposer ledit matériau photosensible,
**en ce que**, suivant l'exposition, ledit substrat est tourné par un angle différent de 0°, et **en ce qu'**ensuite l'exposition est réalisée encore une fois avec les champs d'ondes causés à interférer l'un avec l'autre, ces champs d'ondes formant une image par interférence sous forme de raies, qui présente une période différente de la période de ladite première image par interférence.

4. Procédé selon une quelconque des revendications 1 à 3,
**caractérisé en ce qu'**un agent photorésistant est employé en tant que matériau photosensible.

5. Procédé selon une quelconque des revendications 1 à 4,
**caractérisé en ce que** la structure superficielle est transférée dans ledit substrat par un processus de décapage subséquent.

6. Procédé selon une quelconque des revendications 1 à 5,
**caractérisé en ce que** la structure superficielle est transférée, par un processus de moulage, dans un moule, qui sert en tant que modèle de moulage afin de façonner ledit réseau de micro lentilles.

7. Procédé selon la revendication 6,
**caractérisé en ce que** ladite structure superficielle est transférée, par un processus galvanique de moulage, dans un substrat métallique utilisable comme poinçon de moulage.
